Europäisches Patentamt

European Patent Office

Office européen des brevets

(19)

(11) **EP 1 222 520 B1**

(12) **EUROPÄISCHE PATENTSCHRIFT**

(45) Veröffentlichungstag und Bekanntmachung des Hinweises auf die Patenterteilung:
   **28.01.2004 Patentblatt 2004/05**

(51) Int Cl.⁷: $G06F\ 3/023$

(21) Anmeldenummer: 00965825.3

(22) Anmeldetag: **30.08.2000**

(86) Internationale Anmeldenummer:
   **PCT/DE2000/003061**

(87) Internationale Veröffentlichungsnummer:
   **WO 2001/016687 (08.03.2001 Gazette 2001/10)**

(54) **VERFAHREN UND VORRICHTUNG ZUR POSITIONIERUNG EINES MARKIERUNGSMITTELS AUF EINER AUSGABEEINHEIT**

METHOD AND DEVICE FOR POSITIONING A MARKER ON AN OUTPUT UNIT

PROCEDE ET DISPOSITIF POUR LE POSITIONNEMENT D'UN MOYEN DE REPERAGE SUR UNE UNITE DE SORTIE

(84) Benannte Vertragsstaaten:
   **AT BE CH CY DE DK ES FI FR GB GR IE IT LI LU MC NL PT SE**

(30) Priorität: **30.08.1999 DE 19942646**
   **09.12.1999 DE 19960609**

(43) Veröffentlichungstag der Anmeldung:
   **17.07.2002 Patentblatt 2002/29**

(73) Patentinhaber: **Datango AG**
   **10405 Berlin (DE)**

(72) Erfinder:
   • **MAYER, Pavel**
    **10115 Berlin (DE)**
   • **TRAMBEREND, Henrik**
    **10119 Berlin (DE)**

   • **DAHLKE, Stefan**
    **10435 Berlin (DE)**
   • **MESCHKAT, Steffen**
    **10119 Berlin (DE)**
   • **PAULISCH, Patrick**
    **10115 Berlin (DE)**
   • **ARTOPE, Alexander**
    **10119 Berlin (DE)**

(74) Vertreter: **Gross, Felix, Dr.**
   **Patentanwälte**
   **Maikowski & Ninnemann**
   **Postfach 15 09 20**
   **10671 Berlin (DE)**

(56) Entgegenhaltungen:
   **EP-A- 0 403 125       US-A- 5 898 419**

EP 1 222 520 B1

**Beschreibung**

Die Erfindung betrifft ein Verfahren zur Positionierung eines Markierungsmittels auf einer Ausgabeeinheit nach dem Oberbegriff des Anspruchs 1 und eine Vorrichtung dazu nach dem Oberbegriff des Anspruchs 19.

Bei heutigen Computersystemen ist es üblich, daß Datensätze, wie z.B. Texte, Graphiken oder Videos, in eigenen Darstellungsbereichen auf einem Ausgabebereich (z.B. Bildschirm, Drucker) des Computersystems wiedergegeben werden. Ein Beispiel dafür ist ein Fenster als Darstellungsbereich, das auf einem Bildschirm dargestellt wird. In dem Fenster können wiederum verschiedene Datensätze im Rahmen eines Multidmediadokuments (z.B. Web-Seite) dargestellt werden.

Auch weist der Ausgabebereich in der Regel Darstellungsbereiche auf, in denen Funktionen des Computersystems anwählbar sind, z.B. Menüs oder sogenannte Buttons in Fenstern oder Web-Dokumenten, durch die Funktionen des Computersystems ausgelöst werden können.

Um bei einem solchen Computersystem Befehle an das Computersystem, z.B. über Menüs oder Buttons weiterzugeben, werden Markierungsmittel, wie z.B. ein mit einer Maus bewegter Cursor verwendet. Dieses Markierungsmittel dient dazu, bestimmte Darstellungsbereiche im Ausgabebereich anzuwählen.

Dabei besteht das Problem, daß Darstellungsbereiche in Form, Größe und / oder Position veränderlich sind, so daß das Markierungsmittel eines Computersystems nach einer Veränderung der Form, Größe und / oder Position des Darstellungsbereichs an einer anderen Stelle in Relation zu dem alten Darstellungsbereich steht. Die bekannte Steuerung des Markierungsmittels bezieht sich nämlich auf die absoluten Koordinaten des Ausgabebereichs und nicht auf den Kontext, auf den ein Markierungsmittel in einem Darstellungsbereich zeigt.

Veränderungen des Darstellungsbereiches treten z.B. bei einem Neuaufbau eines Bildschirms oder bei einer automatischen Steuerung der Anzeige auf dem Ausgabebereich ein. Eine automatische Steuerung wird z.B. bei automatischen Führungen eines Nutzers durch eine Web-Seite (sogenannten Web-Rides) verwendet. Ein solches Verfahren ist in der DE 199 42 647 beschrieben.

Ein Nutzer des Computersystems muß sich nach einer Veränderung der Darstellungsbereiche neu orientieren und das Markierungsmittel an die funktionell gleiche Stelle, d.h. die Position mit dem richtigen Kontext setzen. Dies führt zu einer Verlangsamung in der Bedienung und zur Erhöhung der Fehlerquoten.

Aus der US-A 5,898,419 ist ein Verfahren zur Skalierung eines Cursors bekannt. Dabei wird eine Information betreffend der Cursorpositionsanordnung relativ zu einem Bild von einem entfernten Computer auf einen lokalen Computer übertragen. Die Cursordarstellung auf dem lokalen Computer wird in Abhängigkeit vom Verhältnis der Bildgröße auf dem entfernten und dem lokalen Computer skaliert. Diese Cursordarstellung wird dann im Zusammenhang mit dem Bild auf dem lokalen Computer verwendet.

Aus der EP 403 125 A2 ist eine Zoomfunktion bekannt, bei der die Cusorposition automatisch verändert wird.

Der vorliegenden Erfindung liegt die Aufgabe zugrunde, ein Verfahren und eine Vorrichtung zu schaffen, mit dem eine Position eines Markierungsmittels auch nach einer Veränderung der Form, Position und / oder Größe des Darstellungsbereichs im nunmehr veränderten Darstellungsbereich automatisch die funktionell gleiche Position zugewiesen bekommt.

Diese Aufgabe wird erfindungsgemäß durch ein Verfahren mit den Merkmalen des Anspruchs 1 gelöst.

Durch die automatische Zuordnung eines eindeutigen Identifikationsattributs zu einem Darstellungsbereich wird erreicht, daß der Inhalt des Darstellungsbereichs (z.B. der Kontext oder auch die Funktion eines Menüs) auch nach der Veränderung der Form, Größe und / oder Position des Darstellungsbereichs von einem ersten Zustand in einen zweiten Zustand identifizierbar ist.

Die Umrechnung der Position des Markierungsmittels im ersten Zustand in Relativkoordinaten des Darstellungsbereichs, der durch das Markierungsmittel angewählt wird, dient dazu, die interne Position des Markierungsmittels im Darstellungsbereich zu bestimmen. Relativkoordinaten sind im Sinne dieser Erfindung alle Koordinaten, die auf einen bestimmten Darstellungsbereich bezogen sind.

Nach der Veränderung des Darstellungsbereichs, also im zweiten Zustand, wird der Darstellungsbereich im zweiten Zustand anhand des Identifikationsattributs identifiziert und das Markierungsmittel automatisch im Darstellungsbereich entsprechend den Relativkoordinaten und des Identifikationsattributes positioniert.

Durch die Verbindung von Identifikationsattribut und Relativkoordinaten wird erreicht, daß das Markierungsmittel nach einer Veränderung der Größe, Form und / oder der Position des Darstellungsbereichs automatisch auf den gleichen Kontext zeigt.

Vorteilhafterweise wird im erfindungsgemäßen Verfahren die relative Anordnung von graphische Elementen, Buchstaben und / oder Wörtern in mindestens einem Darstellungsbereich über eine eindeutig umkehrbare Layoutfunktion gesteuert. Eine Layoutfunktion ist eine Vorschrift (z.B. mit Programmierbefehlen), die angibt, in welcher Weise dargestellte Elemente des Darstellungsbereichs relativ zueinander angeordnet sind. Durch eine Veränderung von Layoutfunktionen lassen sich Umstellungen der dargestellten Elemente in einem Darstellungsbereich auf effiziente Weise steuern. Dabei kann dem Ausgabebereich selbst eine Layoutfunktion zugewiesen werden, der dann die relative Anordnungen der Darstellungsbereiche im Ausgabebereich bestimmt.

Dabei ist es vorteilhaft, wenn mit einer Umkehrfunktion der Layoutfunktion Relativkoordinaten innerhalb eines Darstellungsbereichs bestimmbar sind. Durch die Umkehrbarkeit der Layoutfunktion lassen sich so Koordinaten in effizienter Weise umrechnen.

In einer vorteilhaften Ausgestaltung des erfindungsgemäßen Verfahrens ist durch die Layoutfunktion jedem Buchstaben in einem Text eine Relativkoordinate zugeordnet, die eine relative Position im Gesamttext und / oder eine Höhe innerhalb einer Textzeile beinhaltet. Mit einer solchen Ausführung der Relativkoordinaten lassen sich Text in besonders einfacher Weise behandeln.

Vorteilhaft ist es auch, wenn das erfindungsgemäße Verfahren eine Layoutfunktion aufweist, der mindestens eine andere untergeordnete Layoutfunktion für eine hierarchisch gesteuerte Darstellung der Datensätze zugeordnet ist. Durch die hierarchische Anordnung der Layoutfunktionen können auch komplexe Darstellungsbereiche, wie z.B. Multimediaseiten mit vielen unterschiedlichen Darstellungstypen, auf einfache Weise bearbeitet werden.

Dabei ist es weiterhin vorteilhaft, wenn die Relativkoordinaten für die Position des Markierungsmittels in Normkoordinaten im Intervall [0, 1] umgerechnet werden. Damit ist besonders einfach eine formatunabhängige Darstellung möglich.

In einer vorteilhaften Ausgestaltung des erfindungsgemäßen Verfahrens weist der Darstellungsbereich eine Begrenzungslinie, insbesondere ein Rechteck auf. In einer weiteren vorteilhaften Ausgestaltung ist die Begrenzungslinie nicht sichtbar. Durch die definierte Begrenzungslinie können relative Positionen der Darstellungsbereiche im Ausgabebereich in besonders einfacher Weise bestimmt werden.

In einer weiteren vorteilhaften Ausgestaltung des erfindungsgemäßen Verfahrens ist der mindestens eine Datensatz Teil einer logischen Struktur, insbesondere nach dem DOModer HTML-Standard, wobei das Identifikationsattribut in Abhängigkeit von der logischen Struktur bestimmt wird. Auf diese Weise wird in einfacher Weise eine vorgegebene Struktur benutzt, um eine eindeutige Identifikation des Inhalts des Darstellungsbereichs zu ermöglichen.

Mit Vorteil werden als Identifikationsattribute Nummern verwendet, wobei die Zuordnung der Identifikationsattribute zu den Darstellungsbereichen in Abhängigkeit von Koordinaten eines vorgebbaren Punktes zu einem bestimmten Zeitpunkt auf der Begrenzungslinie gebildet wird. Die Zuordnung der Identifikationsattribute anhand von Koordinaten (d.h. der geometrischen Anordnung) ist auf einfache Weise möglich.

Ebenfalls mit Vorteil wird als Identifikationsattribut der Pfadname zur Beschreibung der Position des Datensatzes innerhalb eines hierarchischen Baums verwendet wird. Unter Baum wird hier eine Datenstruktur verstanden, bei der Datensätze Verweise auf andere Datensätze aufweisen. Durch die Verwendung der hierarchische Struktur können die einzelnen Datensätze im wesentlichen unabhängig voneinander verwaltet werden. Änderungen in einem Teil der Datenstruktur beeinflussen so andere Bereiche nicht.

Weiterhin ist es vorteilhaft, wenn ein Transferdatensatz aus dem Identifikationsattribut und den Relativkoordinaten gebildet wird. Dieser Transferdatensatz ermöglicht eine einfache Weiterverarbeitung der Daten.

In einer weiteren vorteilhaften Ausgestaltung wird der Transferdatensatz dazu verwendet, eine Transformation der Relativkoordinaten in Koordinaten des Ausgabebereichs durchzuführen. Durch diese Rücktransformation wird eine vereinfachte Darstellung der Position des Markierungsmittels auf dem Bildschirm erreicht.

Eine besonders vorteilhafte Ausgestaltung des erfindungsgemäßen Verfahrens betrifft den Fall, daß das Markierungsmittel im ersten Zustand gleichzeitig in mehr als einem Darstellungsbereich angeordnet ist, der Darstellungsbereich als angewählt gilt, dessen Identifikationsattribut in einer Metrik der Identifikationsattribute einen Extremwert aufweist. Unter Metrik wird hier z.B. die Abfolge der natürlichen Zahlen oder eine Hierarchie von Pfadnamen verstanden.

In einer weiteren vorteilhaften Ausgestaltung des erfindungsgemäßen Verfahren wird der Darstellungsbereich angewählt wird, in dem die Position des Markierungsmittels liegt. Für den Fall, daß die Position des Markierungsmittels in mehreren Darstellungsbereichen liegt, ist es vorteilhaft, daß der Darstellungsbereich angewählt wird, der die kleinste Fläche aufweist.

Mit Vorteil weist der Darstellungsbereich mindestens ein Wort oder ein graphisches Symbol auf, da hier die kontextbezogene Zuordnung des Markierungsmittels besondere Bedeutung besitzt.

Dabei ist es besonders vorteilhaft, wenn im erfindungsgemäßen Verfahren die Positionierung des Markierungsmittels durch das Identifikationsattribut und die Relativkoordinaten so gesteuert wird, daß das Markierungsmittel im zweiten Zustand auf demselben Wort oder demselben graphischen Symbol steht wie im ersten Zustand.

Die Aufgabe wird auch durch eine Vorrichtung zur Durchführung des erfindungsgemäßen Verfahrens nach dem Anspruch 19 gelöst. Mit einer solche Vorrichtung kann als Software oder als Hardware ausgebildet sein, um eine kontextsensitive Steuerung des Markierungsmittels zu ermöglichen. Dabei ist es besonders vorteilhaft, wenn die erfindungsgemäße Vorrichtung in einem Handgerät angeordnet ist.

Die Erfindung wird nachfolgend unter Bezugnahme auf die Figuren der Zeichnungen an mehreren Ausführungsbeispielen näher erläutert. Es zeigen:

Fig. 1    eine schematische Darstellung einer Veränderung mehrerer Darstellungsbereiche von einem ersten Zustand zu einem zweiten Zustand;

Fig. 2a. eine schematische Darstellung eines Ausgabebereichs mit zwei Darstellungsbereichen im einem ersten Zustand und mit einem Markierungsmittel;

Fig. 2b eine schematische Darstellung einer Veränderung der Darstellungsbereiche aus Fig. 2a in einen zweiten Zustand.

Fig. 3a einen beispielhafte Darstellung der Anzeige eines HTML-Datensatzes (erster Zustand);

Fig. 3b Darstellung der Anzeige nach Fig. 3a (zweiter Zustand);

Fig. 4 Darstellung eines HTML-Programms zu den Fig. 3a, 3b mit Identifikationsattributen.

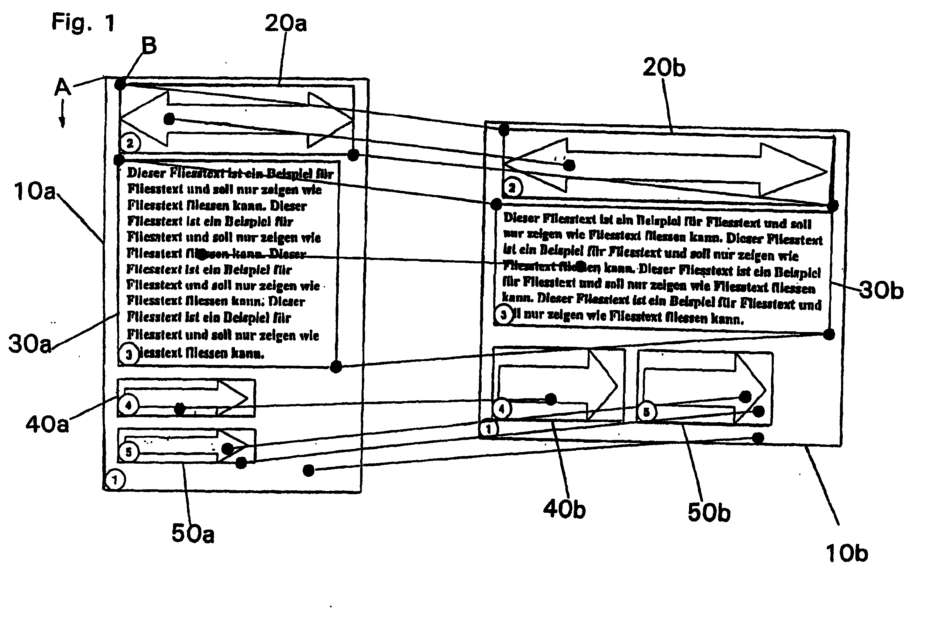

Fig. 1 zeigt verschiedene rechteckige erste bis fünfte Darstellungsbereiche 10, 20, 30, 40, 50 für Datensätze, wie sie üblicherweise auf einem Bildschirm eines Computersystems dargestellt werden. Dabei zeigt die linke Seite der Fig. 1 einen ersten Zustand (Bezugszeichen mit a), die rechte Seite der Fig. 1 einen zweiten Zustand (Bezugzeichen mit b). Der erste Zustand ist in diesem Fall der Ausgangszustand, der zweite Zustand ist der Endzustand einer Veränderung der Form, Größe und Position der Darstellungsbereiche 10b, 20b, 30b, 40b, 50b.

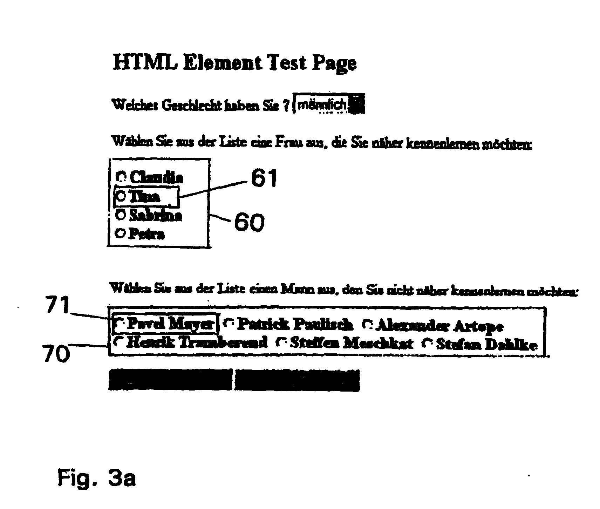

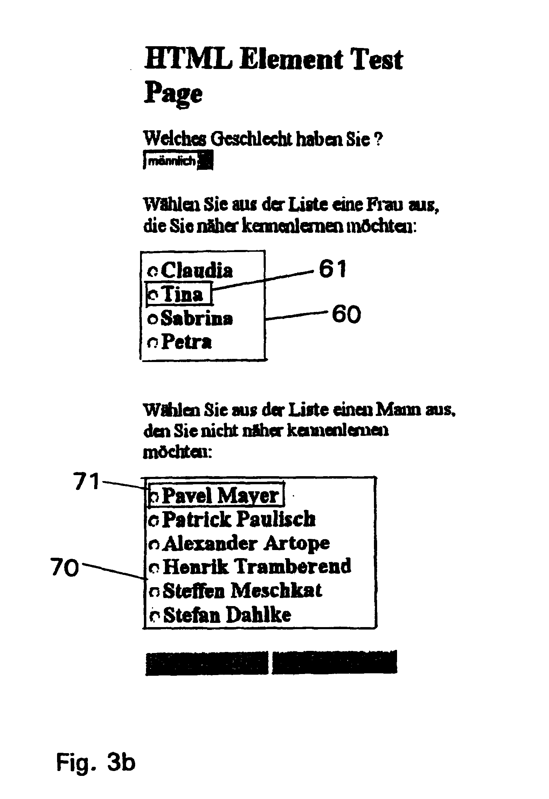

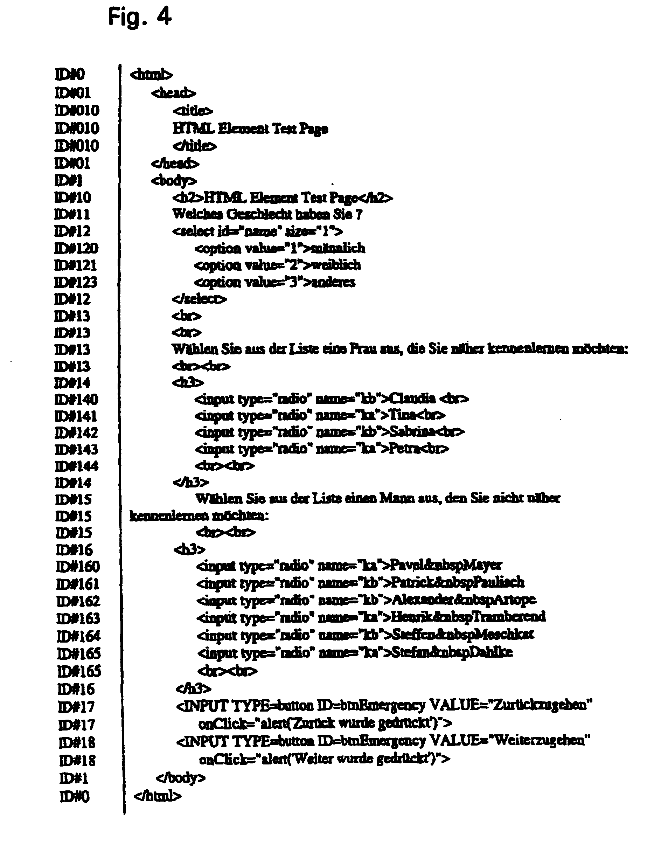

Solche Ansichten von Darstellungsbereichen 10a, 20a, 30a, 40a, 50a, 10b, 20b, 30b, 40b, 50b in verschiedenen Zuständen finden sich z.B. in Darstellungen von Fenstern mit HTML-Seiten. Dabei können in einer hier nicht dargestellten Alternative die Darstellungsbereiche auch hierarchisch aufgebaut sein, d.h. ein Darstellungsbereich enthält seinerseits weitere Darstellungsbereiche. Eine solche Darstellung findet sich in Fig. 3a, 3 und 4.

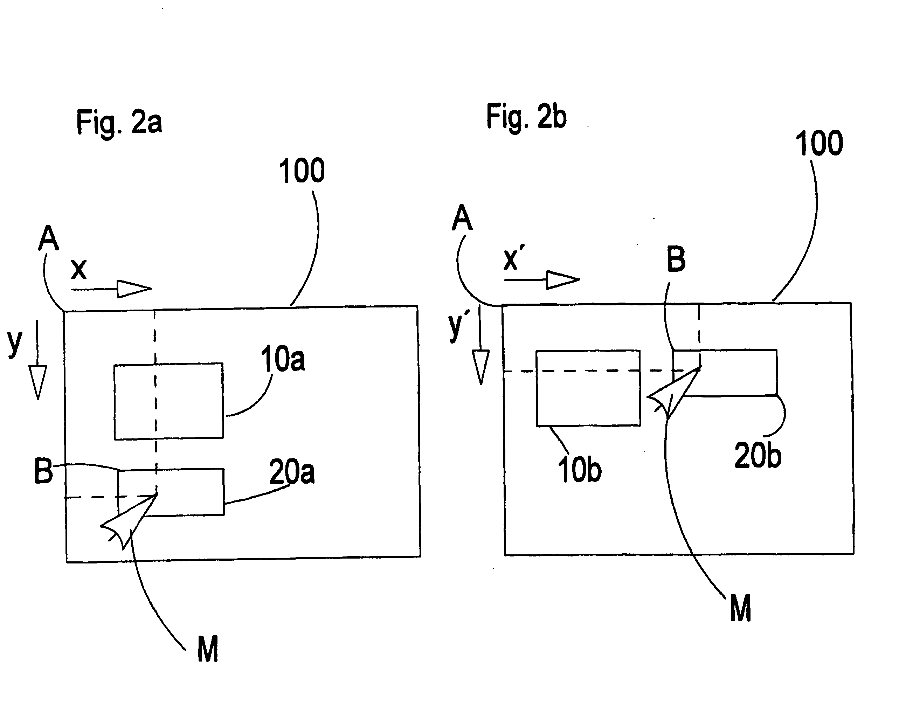

Die ersten bis fünften Darstellungsbereiche 10, 20, 30, 40, 50 sind in ihrer Form, Größe und / oder Position im Ausgabebereich 100 veränderbar (siehe auch Fig. 2a, 2b). Eine solche Veränderung kann durch Benutzerintervention oder durch programmgesteuerte Eingriffe erfolgen.

Insbesondere können die Seitenverhältnisse (aspect ratio) der ersten bis fünften Darstellungsbereiche 10, 20, 30, 40, 50 verändert werden. Auch können sich die relativen Anordnungen der Darstellungsbereiche 10, 20, 30, 40, 50 untereinander ändern. So stehen in Fig. 1 der vierte Darstellungsbereich 40a und der fünfte Darstellungsbereich 50a im ersten Zustand übereinander, im zweiten Zustand nebeneinander. Eine solche Änderung ergibt sich z.B. bei HTML-Seiten, wenn sich das Seitenverhältnis des Fensters (hier der erste Darstellungsbereich 10a, 10b) ändert. Die zweiten bis fünften Darstellungsbereiche 20a, 30a, 40a, 50a, 20b, 30b, 40b, 50b im Inneren des Fensters bekommen eine andere Form und werden untereinander anders angeordnet.

Unter einem Darstellungsbereich 10, 20, 30, 40, 50 wird hier jede auf dem Ausgabebereich 100 des Bildschirms dargestellte Information verstanden, die von einem hier nicht dargestellten Cursor als Markierungsmittel M anwählbar ist (siehe Fig. 2a, 2b). Unter Anwählen wird hierbei verstanden, daß das Computersystem in Abhängigkeit von der Position des Markierungsmittels M erkennt, daß eine bestimmte Funktion ausführbar ist oder ausgeführt wird. Dies kann z.B. das Ausführen einer Funktion (z.B. über ein Menü), das Markieren eines Wortes in einem Text oder das Aktivieren eines Fensters sein.

Im vorliegenden Fall sind die Darstellungsbereiche von einer sichtbaren Begrenzungslinie umgeben, die zum Darstellungsbereich 10, 20, 30, 40, 50 zugehörig definiert ist. In einer alternativen Ausführungsform ist die Begrenzungslinie nicht sichtbar. Anhand der Position des Markierungsmittels M ist in diesem Fall entscheidbar, in welchem Darstellungsbereich 10, 20, 30, 40, 50 sich das Markierungsmittel M befindet.

Im vorliegenden Beispiel ist der erste Darstellungsbereich 10 ein HTML-Dokument, das die zweiten bis fünften Darstellungsbereiche 20, 30, 40, 50 enthält.

Im vorliegenden Fall enthält der dritte Darstellungsbereiche 30 einen Fließtext mit mehreren Zeilen. Der vierte Darstellungsbereich 40 und der fünfte Darstellungsbereich 50 sind als graphische Symbole (Pfeil) ausgebildet, denen eine Funktion hinterlegt ist. Diese Funktion besteht in einem Weiterblättern zu einem anderen Hypertext-Dokument. Der zweite Darstellungsbereich 20 beinhaltet eine graphische Darstellung, die hier als Doppelpfeil symbolisiert ist.

Darstellungsbereiche 10, 20, 30, 40, 50 stellen demnach nicht nur Datensätze mit Textinhalten dar, sondern können auch Befehle, Links zu anderen Seiten oder graphische Darstellungen enthalten. Darstellungsbereiche 10, 20, 30, 40, 50 in diesem Sinne sind also auch Menüleisten, Pulldown-Menüs oder sogenannte Buttons in HTML-Seiten.

Bei dem hier gewählten Beispiel einer HTML-Seite sind die einzelnen Darstellungsbereiche 10, 20, 30, 40, 50 über eine logische Struktur miteinander verknüpft. Die logische Struktur ergibt sich dabei aus der Definition der Darstellungsbereiche 10, 20, 30, 40, 50 in der HTML-Sprache. Eine ähnliche Struktur ist das Document Object Model (DOM). Eine solche Struktur dient dazu, die Positionen der einzelnen Darstellungsbereiche 10, 20, 30, 40, 50 relativ zueinander in einem Dokument zu definieren.

Das erfindungsgemäße Verfahren verwendet diese vorgegebene logische Struktur des Dokuments dazu, um den einzelnen Darstellungsbereichen 10a 20a, 30a, 40a, 50a im Ausgangszustand ein eindeutiges erstes bis fünftes Identifikationsattribut 1, 2, 3, 4, 5 zuzuordnen. In Fig. 1 sind die Identifikationsattribute 1, 2, 3, 4, 5 als Zahlen in Kreisen dargestellt.

Die Identifikationsattribute 1, 2, 3, 4, 5 gehören dabei zu den ersten bis fünften Darstellungsbereichen 10, 20, 30, 40, 50 selbst und sind unabhängig von Änderungen der Form, Größe und / oder Position der Darstellungsbereiche 10, 20, 30, 40, 50. Somit stellen die Identifikationsattribute 1, 2, 3, 4, 5 eine Verbindung zu den Inhalten (Kontext) der Darstellungsbereiche 10, 20, 30, 40, 50 her.

Im vorliegenden Fall werden als Identifikationsattribute natürliche Zahlen verwendet. Die Zuordnung der Identifikationsattribute 1, 2, 3, 4, 5 anhand der Struktur des HTML-Codes wird in Fig 3a, 3b und 4 näher erläutert.

Diese Zuordnung der Identifikationsattribute 1, 2, 3, 4, 5 ist hier beispielhaft gewählt. Es ist auch jede andere Zuordnung denkbar, die zu einer eindeutigen Zuordnung zwischen Darstellungsbereich 10, 20, 30, 40, 50 und Identifikationsattribut 1, 2, 3, 4, 5 führt.

Alternativ können Identifikationsattribute 1, 2, 3, 4, 5 auch als Pfade gebildet werden. Ein Pfad beschreibt dabei den Weg zu einem Darstellungsbereich innerhalb eines hierarchischen Baums; es werden "Verwandschaften" zwischen den Darstellungsbereichen erzeugt. Ohne Bezug zu den Figuren bedeutet beispielsweise ein Pfad (2,4,2,3), daß der Darstellungsbereich 3 Kind von 2 ist, der wiederum Kind von 4 ist, der wiederum Kind von 2 ist.

Die Verbindungslinien mit den schwarzen Punkten in Fig. 1 stellen die Punkte der Darstellungsbereiche 10, 20, 30, 40, 50 dar, die bei der Änderung vom ersten Zustand in den zweiten Zustand miteinander korrelieren.

Nachdem das erfindungsgemäße Verfahren automatisch eine eindeutige Zuordnung Identifikationsattribut - Darstellungsbereich vorgenommen hat, wird diese Information dazu benutzt, um bei einer Veränderung der Form, Größe und / oder Position der Darstellungsbereiche 10a, 20a, 30a, 40a, 50a, 10b, 20b, 30b, 40b, 50b das Markierungsmittel M zu steuern.

Üblicherweise ist die Positionierung des Markierungsmittels M völlig unabhängig von dem Kontext, auf die das Markierungsmittel M zeigt. Maßgeblich sind für die Positionierung üblicherweise die Koordinaten des Ausgabebereichs eines Bildschirms.

Erfindungsgemäß wird aber das Markierungsmittel M mitgeführt, wenn z.B. ein Programm die Steuerung der Inhalte eines HTML-Dokuments übernimmt und der Benutzer von einem HTML-Dokument zu einem anderen geführt wird, so daß das Markierungsmittel M stets im gewünschten Kontext steht.

Die Änderung der Darstellungsbereiche 10a, 20a, 30a, 40a, 50a von einem ersten Zustand (in Fig. 1 links) und einem zweiten Zustand (in Fig. 1 rechts) führt zu einer Umgruppierung der zweiten bis fünften Darstellungsbereiche 20, 30, 40, 50.

Dies ist schematisch in den Fig. 2a und 2b dargestellt. In beiden Figuren wird derselbe Ausgabebereich 100 eines Computersystems dargestellt. Auf dem Ausgabebereich 100 sind in Fig. 2a und 2b jeweils der erste Darstellungsbereich 10 und der zweite Darstellungsbereich 20 dargestellt.

Die Fig. 2a stellt dabei den ersten Zustand (siehe auch linke Seite der Fig. 1) dar, die Fig. 2b stellt den zweiten Zustand (siehe auch rechte Seite der Fig. 1) dar. Die Zustände unterscheiden sich dadurch, daß der zweite Darstellungsbereich 20 sich vom ersten Zustand zum zweiten Zustand relativ zum ersten Darstellungsbereich 10 verschoben hat.

Das erfindungsgemäße Verfahren ermöglicht es, daß die Position des Markierungsmittels M an einer Position x,y in einem Darstellungsbereich 10a, 20a in eine funktionell äquivalente Position x', y' in einem anderen Darstellungsbereich 10b, 20b umgewandelt wird. Die Koordinaten x',y' bezeichnen die Koordinaten im zweiten Zustand in einem Koordinatensystem, das auf den Ausgabebereich bezogen ist.

Dem Ausgabebereich 100 ist ein Koordinatensystem x, y zugeordnet, das in der linken oberen Ecke A des Ausgabebereiches 100 am Punkt A seinen Ursprung hat. Die Zählrichtung der Koordinaten ist mit den Pfeilen x, y angegeben. Das x,y-Koordinatensystem ist nur mit dem Ausgabebereich 100 verbunden und verändert sich daher vom ersten Zustand (Fig. 2a) zum zweiten Zustand (Fig. 2b) nicht. Das Koordinatensystem im zweiten Zustand wird allerdings zur Unterscheidungszwecken als x', y'-Koordinatensystem bezeichnet.

Die Darstellung des Ausgabebereichs 100 und der einzelnen Darstellungsbereiche 10a, 10b, 20a, 20b wird durch einen Satz Layoutfunktionen definiert, die dem Ausgabebereich 100 und dem Darstellungsbereichen 10a, 10b, 20a, 20b zugeordnet sind. Unter eine Layoutfunktion $L_0...L_N$ wird ein Satz von Befehlen verstanden, der die Formatierung von n Darstellungsbereichen 10a, 10b, 20a, 20b steuert. Dabei wird durch Layoutfunktionen insbesondere auch die relative Anordnungen von Darstellungsbereichen untereinander bestimmt, die in einem übergeordneten Darstellungsbereich angeordnet sind. Die höchstrangige Layoutfunktion bestimmt die Darstellung der Darstellungsbereiche 10, 20 im Ausgabebereich 100.

Der Anzeigebereich 100 umfaßt alle Darstellungsbereiche 10a, 10b, 20a, 20b, wobei die übergeordnete Layoutfunktion $L_0$ die relative Anordnung der Darstellungsbereiche im Anzeigebereich 100 im ersten Zustand festlegt; die Layoutfunktion $L_0'$ bestimmt die Darstellung im zweiten Zustand. Die Layoutfunktionen $L_1$ und $L_2$ legen das fest, was im ersten Zustand im ersten und zweiten Darstellungsbereich dargestellt wird; die Layoutfunktion $L_1'$ und $L_2'$ bestimmen die Darstellung im zweiten Zustand.

Die hierarchisch übergeordnete Layoutfunktion $L_0$ umfaßt logisch die untergeordneten Layoutfunk-

tionen $L_1...L_N$.

Im ersten Zustand (Fig. 2a) zeigt das Markierungsmittel M auf einen bestimmten Punkt des zweiten Darstellungsbereiches 20a; der zweite Darstellungsbereich 20a wird angewählt, um eine bestimmte Funktion auszuführen. Die Koordinaten der Spitze des Markierungsmittels M werden relativ zu dem x,y-Koordinatensystem bestimmt (gestrichelte Linien).

Im dargestellten Fall überlappen sich in Fig. 2a der erste Darstellungsbereich 10a und der zweite Darstellungsbereich 20a nicht. Hier wird im Fall der Überlappung bei dem erfindungsgemäßen Verfahren so vorgegangen, daß der Darstellungsbereich angewählt wird, der die kleinste Fläche aufweist.

Nunmehr wird durch ein Programm des Computersystems der Ausgabebereich 100 von einem ersten Zustand in einen zweiten Zustand geändert. In Fig. 2b ist dargestellt, daß der zweite Darstellungsbereich 20b seine Position relativ zu dem ersten Darstellungsbereich 10a im ersten Zustand (Fig. 2a) geändert hat.

Dabei zeigt das Markierungsmittel M automatisch immer noch auf den zweiten Darstellungsbereich 20b im zweiten Zustand. Der Kontext, auf den das Markierungsmittel M zeigt, wird durch die Umgruppierung der Darstellungsbereiche 10, 20 nicht beeinflußt.

Im folgenden wird davon ausgegangen, daß im zweiten Darstellungsbereich 20 ein mehrzeiliger Text steht, wobei sichergestellt werden soll, daß das Markierungsmittel M nach der Umgruppierung vom ersten Zustand in den zweiten Zustand auf dem gleichen Wort steht.

Zur Durchführung dieses verfahren müssen die verwendeten Darstellungsbereiche 10, 20 folgende Vorbedingungen erfüllen.

1. Die Darstellungsbereiche 10, 20 sind Teilbereiche des Ausgabebereiches. Man könnte die Darstellungsbereiche 10, 20 auch als dargestellte "Dokumente" bezeichnen.

Die Darstellungsbereiche 10, 20 sind von einer Begrenzungslinie umgeben, wobei jedem Punkt innerhalb eines Darstellungsbereichs 10, 20 durch eine Layoutfunktion $L_e$ eindeutig eine Koordinate x,y zuordbar ist. Parameter u,v sind normierte Koordinaten im Wertebereich von 0 bis 1. Es exisitiert eine Umkehrfunktion $L_e^I$, die eine Rückwandlung der Koordinaten bewirkt:

$$L_e(u,v) = (x,y) \Leftrightarrow L_e^I(x,y) = (u,v)$$

Bei einer rechteckigen Begrenzungslinie wird ein kartesisches Koordinatensystem verwendet. Folgendes Beispiel zeigt Layoutfunktionen für rechteckige Darstellungsbereiche:

$$L_e(u, v) = (x,y)$$

$$L_e(u,v) = (x_e + u*b_e, y_e + v*h_e)$$

Hierbei sind:

$x_e$: x-Koordinate einer vertikalen Rechteckkante des Darstellungsbereichs

$y_e$: y-Koordinate einer horizontalen Rechteckkante des Darstellungsbereichs

$b_e$: Breite des rechteckigen Darstellungsbereichs

$h_e$: Höhe des rechteckigen Darstellungsbereichs

Die Umkehrfunktion ist in diesem Fall:

$$L_e^I(x,y) = (u,v)$$

$$L_e^I(x,y) = ( (x - x_e) / b_e , (y - y_e) / h_e )$$

In einer alternativen Ausgestaltung weist die Layoutfunktion eine nichtlineare Funktion auf, die jedem Buchstaben in einem Text (oder jedem graphischen Element in einer Darstellung) eine Position im Darstellungsbereich zuordnet. Der normierte Parameter u bezeichnet in diesem Fall den Buchstaben relativ zur Gesamttextlänge, der Parameter v die Höhe innerhalb der jeweiligen Zeile.

Grundsätzlich ist jede beliebige Layoutfunktion verwendbar, wenn eine eindeutige Umkehrfunktion existiert, so daß eine kontextsensitive Nachführung des Markierungsmittels M von einem ersten in einen zweiten Zustand gewährleistet ist.

Zur Vereinfachung wird in einer alternativen Ausführungsform eine komplexe Layoutfunktion in mehrere Layoutfunktionen unterteilt, um einfacher aufgebaute Darstellungsbereiche zu erhalten. So kann eine Textlayoutfunktion aus einer Vielzahl von Rechtecklayoutfunktionen (z.B. für jeden Buchstaben eine) zusammengesetzt werden.

2. Eindeutige Zuordnung eines Identifikationsattributes ID für jeden Darstellungsbereich 10, 20, insbesondere nach einem der oben beschriebenen Varianten.

Zur kontextgenauen Positionierung des Markierungsmittel M wird erfindungsgemäß dann folgender Algorithmus automatisch ausgeführt:

1) Ermittlung der Position $x_0$, $y_0$ des Markierungsmittels M im x,y-Koordinatensystem des Ausgabebereichs, der mit der Layoutfunktion $L_0$ formatiert ist.

2) Aus allen Darstellungsbereichen 10, 20, die den Punkt $x_0$, $y_0$ einschließen, wird der Darstellungsbereich e mit der kleinsten Fläche ausgewählt.

3) Aus der Menge der Layoutfunktionen wird die zu dem Darstellungsbereich e gehörige Layoutfunktion $L_e$ und deren Umkehrfunktion $L_e^I$ ausgewählt oder berechnet.

4) Mit der Layoutumkehrfunktion $L_e^I(x,y)$ werden die normietern Parameter u,v des ausgewählten Darstellungsbereichs e berechnet:

$$(u,v) = L_e^I (x,y)$$

5) Zuordnung der Identifikationsattribute $ID_0$.. $ID_n$ zu allen Darstellungsbereichen 0... ,i, ... N.

6) Jedes Tripel ($ID_i$, $u_i$, $v_i$) bezeichnet nunmehr eine Position des Markierungsmittels M, die von einem Layout unabhängig ist. Eine solche Situation entspricht dem ersten Zustand in Fig. 2a.

7) Werden die Darstellungsbereiche mit einem anderen Satz von Layoutfunktionen $L_0'...L_N'$ formatiert angezeigt (z.B. zweiter Zustand nach Fig. 2b), wird zunächst der Darstellungsbereich e, der im ersten Zustand (u.a. anhand des Identifikationsattributs ID) ausgewählt worden war, automatisch ermittelt.

8) Die korrespondierende Layoutfunktion $L_e'$ wird nun dazu verwendet, die Position (x', y') des Markierungsmittels M in dem mit dem anderen Satz $L_0'...L_N'$ Layoutfunktionen formatierten Darstellungsbereich zu bestimmen:

$$(x',y') = L_e'(u,v)$$

Durch den Vektor (ID, u, v) wird die Position des Markierungsmittels M im ersten Zustand eindeutig mit dem Kontext des Darstellungsbereichs mit dem Identifikationsattribut ID verbunden. Die räumliche Anordnung innerhalb des Darstellungsbereichs ist durch das u,v-Relativkoordinatensystem festgelegt. Dieses u,v-Relativkoordinatensystem ist formatunabhängig.
Nach der Veränderung des Darstellungsbereiches 20 vom ersten Zustand in den zweiten Zustand wird das Markierungsmittel M im Ausgabebereich 100 automatisch so nachgeführt, daß es wieder auf den zweiten Darstellungsbereich 20b zeigt. Die genaue Position wird dabei über die u,v-Relativkoordinaten bestimmt, die durch eine Rückwärtsanwendung des obigen Algorithmus automatisch in das x,y-Koordinatensystem umgerechnet werden.
Somit ermöglicht das erfindungsgemäße Verfahren eine automatische Nachführung des Markierungsmittels M auf dem Ausgabebereich 100 des Bildschirms. Somit steht das Markierungsmittel M im zweiten Zustand an derselben funktionellen Position des Darstellungsbereichs 20b wie im ersten Zustand.
In alternativen Ausgestaltungen weicht die Form der Darstellungsbereiche von einem Rechteck ab. Grundsätzlich ist das erfindungsgemäße Verfahren auch dann anwendbar, wobei nur eine an die Form des Darstellungsbereichs angepaßte Metrik (z.B. Polarkoordinaten) gewählt werden muß. Auch ist dieses Verfahren bei dreidimensionalen Darstellungen (virtual reality) anwendbar, bei dem Kartesische-, Kugel-, Zylinder oder ein sonstiges Koordinatensystem verwendet werden.
Rechentechnisch wird das erfindungsgemäße Verfahren durch eine Software realisiert, die entsprechende Mittel zur Steuerung der Identifikationsattribute. 1, 2, 3, 4, 5, ID und der Koordinatenumrechnungen aufweist. Dabei können diese Softwaremittel insbesondere als Java-Applets ausgebildet, sein. Alternativ ist auch eine Implementation auf einem speziell ausgebildeten Prozessor möglich.
In den Fig. 3a und 3b ist beispielhafterweise ein HTML-Dokument dargestellt, das in Fig. 3a in einem ersten Zustand, in Fig. 3b in einem zweiten Zustand dargestellt ist. Die Änderung des Formats des HTML-Dokuments vom ersten Zustand in den zweiten Zustand wurde bereits im Zusammenhang mit Fig. 1 erläutert, so daß hier darauf nicht mehr eingegangen wird.
Der Inhalt des HTML-Dokuments ist hier ohne Belang, da es hier lediglich die Zuordnung von Identifikationsattributen 1, 2, 3, 4, 5, ID (siehe Fig. 4) zu verschiedenen Darstellungsbereichen 60, 61, 70, 71 beschrieben werden soll.
Das HTML-Dokument der Fig. 3a und Fig. 3b weist eine Vielzahl von Darstellungsbereichen auf, wobei hier aus Gründen der Übersichtlichkeit nur vier Darstellungsbereiche 60, 61, 70, 71 gesondert hervorgehoben sind. Die Darstellungsbereiche 60, 61, 70, 71 sind hier nicht von sichtbaren Begrenzungslinien umschlossen.
In Fig. 3a, 3b werden als diese gesonderten Darstellungsbereiche 60, 70 zwei Listen hervorgehoben, nämlich ein oberer Darstellungsbereich 60 und ein unterer Darstellungsbereich 70. Jedes Element der Listen ist wiederum ein eigener Darstellungsbereich 61, 71, der hierarchisch unterhalb der Darstellungsbereiche 60, 70 liegt.
In Fig. 3b wird dasselbe HTML-Dokument in einem anderen Format dargestellt, so wie es sich ergibt, wenn das hier nicht dargestellte Fenster, in dem das HTML-Dokument angezeigt wird, in seinen Abmessungen verändert wird. Die Darstellungsbereiche 61 innerhalb des oberen Darstellungsbereichs 60 werden gegenüber dem ersten Zustand nicht umgruppiert.
Die Darstellungsbereiche 71 im unteren Darstellungsbereich 70 sind gegenüber dem ersten Zustand in Fig. 3 umgruppiert.

Fig. 4 zeigt nun das HTML-Programm, das den Darstellungen der Fig. 3a und 3b zugrunde liegt.

In der linken Spalte sind die Identifikationsattribute ID#xxx dargestellt. Die "#xxx" stehen dabei für die den einzelnen Darstellungsbereichen 60, 61, 70, 71 zugeordneten Zahlen der Identifikationsattribute.

Rechts neben den Identifikationsattributen ID#xxx ist der Inhalt des HTML-Dokuments dargestellt. Wie bei HTML-Dokumenten üblich, folgt die Anordnung einer strukturierten Darstellung. So befindet sich das gesamte HTML-Dokument zwischen den Tags <html> und </html>. Diese Tags kennzeichnen die höchste Ebene der Darstellungsbereiche, denn alle anderen Darstellungsbereiche sind innerhalb dieser Struktur angeordnet. In der linken Spalte sind diesem höchstrangigen Darstellungsbereich daher die Identifikationsattribute ID#0 zugeordnet.

Unterhalb dieser logischen Ebene liegt die Definition der Überschrift mit dem Identifikationsattribut ID#01 sowie dem Inhalt der Überschrift mit dem Identifikationsattribut ID#010. Je tiefer die Position eines Darstellungsbereichs in der Hierarchie des HTML-Dokuments ist, so mehr Stellen xxx bekommt das Identifikationsattribut ID#xxx. Auf derselben Hierarchiestufe werden die Darstellungsbereiche gemäß ihrer Anordnung im HTML-Programm durchnummeriert.

Der obere Darstellungsbereich 60 aus der Fig. 3a, 3b ist die Liste, die in der Darstellung der Fig. 4 das Identifikationsattribut ID#14 erhält. Die vier Elemente der Liste erhalten demzufolge die Identifikationsattribute ID#140 bis ID#143. Der in Fig. 3a, 3b beispielhaft hervorgehobene Darstellungsbereich 61 innerhalb dieser oberen Liste hat das Identifikationsattribut ID#141.

Der untere Darstellungsbereich 70 aus der Fig. 3a, 3b weist das Identifikationsattribut ID#16 auf, wobei die sechs Listenelemente die Identifikationsattribute ID#160 bis ID#165 aufweisen. Der in Fig. 3a, 3b hervorgehobene Darstellungsbereich 71 weist das Identifikationsattribut ID#160 auf.

Aufgrund des strukturierten Aufbaus von HTML-Dokumenten ist es möglich, die Identifikationsattribute ID#xxx automatisch durch ein Programm bestimmten Inhalten (Kontexten) des HTML-Dokuments zuzuordnen.

So ist der Inhalt (d.h. die Bedeutung) des hervorgehobenen Darstellungsbereichs 71 in der unteren Liste der Fig. 3a, 3b durch das Identifikationsattribut ID#160 eindeutig definiert, und zwar im ersten Zustand (siehe Fig. 3a) als auch im zweiten Zustand (siehe Fig. 3b).

Steht nun ein Markierungsmittel M im ersten Zustand auf diesem Darstellungsbereich 71, so wird das Markierungsmittel M durch das erfindungsgemäße Verfahren auch im zweiten Zustand auf den Inhalt dieses Darstellungsbereichs 71 zeigen. Der Benutzer muß den gleichen Darstellungsbereich 71 im neuen (d.h. zweiten Zustand) nicht neu suchen.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Verfahren und der erfindungsgemäßen Steuervorrichtung auch bei grundsätzlich anders gearteten Ausführungen Gebrauch machen.

**Patentansprüche**

1. Verfahren zur Steuerung eines Markierungsmittels, insbesondere eines Cursors, auf einer Ausgabeeinheit für Datensätze, mit
   einem auf der Ausgabeeinheit definierbaren Ausgabebereich, in dem mindestens ein Datensatz in einem Darstellungsbereich dargestellt ist und das Markierungsmittel einen Darstellungsbereich anwählt, und
   die Form, Position und / oder Größe des Darstellungsbereichs im Ausgabebereich von einem ersten Zustand in einen zweiten Zustand verändert wird,
   **dadurch gekennzeichnet, daß**

   a) dem mindestens einem Datensatz automatisch ein im ersten und zweiten Zustand eindeutiges Identifikationsattribut (1, 2, 3, 4, 5, ID#xxx) zugeordnet wird,

   b) im ersten Zustand die Position (x,y) des Markierungsmittels (M) im Ausgabebereich (100) in Relativkoordinaten (u,v) des Darstellungsbereichs (10a, 20a, 30a, 40a, 50a, 60a, 61a, 70a, 71a) umgerechnet wird,

   c) der Darstellungsbereich (10b, 20b, 30b, 40b, 50b, 60b, 61b, 70b, 71b) im zweiten Zustand anhand des Identifikationsattributs (1, 2, 3, 4, 5, ID#xxx) identifiziert wird und

   d) das Markierungsmittel (M) automatisch im Darstellungsbereich (10b, 20b, 30b, 40b, 50b, 60b, 61b, 70b, 71b) entsprechend den Relativkoordinaten (u,v) und der Identifikationsattribute (1, 2, 3, 4, 5, ID#xxx) positioniert wird.

2. Verfahren nach Anspruch 1, **dadurch gekennzeichnet, daß** die relative Anordnung von graphische Elemente, Buchstaben und / oder Wörtern in mindestens einem Darstellungsbereich (10, 20, 30, 40, 50, 60, 61, 70, 71) über eine Layoutfunktion gesteuert wird.

3. Verfahren nach Anspruch 2, **dadurch gekennzeichnet, daß** mittels der einer Umkehrfunktion der Layoutfunktion Relativkoordinaten (u,v) innerhalb eines Darstellungsbereichs (10, 20, 30, 40, 50, 60, 61, 70, 71) bestimmbar sind.

**4.** Verfahren nach Anspruch 2 oder 3, **dadurch gekennzeichnet, daß** die Layoutfunktion jedem Buchstaben in einem Text eine Relativkoordinate (u,v) zuordnet, die eine relative Position im Gesamttext und / oder eine Höhe innerhalb einer Textzeile beinhaltet.

**5.** Verfahren nach mindestens einem der Ansprüche 2 bis 4, **dadurch gekennzeichnet, daß** eine Layoutfunktion mindestens eine andere untergeordnete Layoutfunktion für eine hierarchisch gesteuerte Darstellung der Datensätze aufweist.

**6.** Verfahren nach mindestens einem der vorhergehenden Ansprüche, **dadurch gekennzeichnet, daß** die Relativkoordinaten (u,v) in Normkoordinaten im Intervall [0, 1] umgerechnet werden.

**7.** Verfahren nach mindestens einem der vorhergehenden Ansprüche, **dadurch gekennzeichnet, daß** der Darstellungsbereich (10, 20, 30, 40, 50) eine Begrenzungslinie, insbesondere ein Rechteck aufweist.

**8.** Verfahren nach Anspruch 7, **dadurch gekennzeichnet, daß** die Begrenzungslinie nicht im Ausgabebereich nicht sichtbar ist.

**9.** Verfahren nach mindestens einem der vorhergehenden Ansprüche, **dadurch gekennzeichnet, daß** der mindestens eine Datensatz Teil einer logischen Struktur, insbesondere nach dem DOM- oder HTML-Standard, ist und das Identifikationsattribut (1, 2, 3, 4, 5, ID#xxx) in Abhängigkeit von der logischen Struktur bestimmt wird.

**10.** Verfahren nach mindestens einem der vorhergehenden Ansprüche, **dadurch gekennzeichnet, daß** als Identifikationsattribute (1, 2, 3, 4, 5, ID#xxx) Nummern verwendet werden, wobei die Zuordnung der Identifikationsattribute (1, 2, 3, 4, 5, ID#xxx) zu dem Darstellungsbereich (10a, 20a, 30a, 40a, 50a, 60a, 61a, 70a, 71a) in Abhängigkeit von Koordinaten eines vorgebbaren Punktes auf der Begrenzungslinie zu einem bestimmten Zeitpunkt gebildet wird.

**11.** Verfahren nach mindestens einem der vorhergehenden Ansprüche, **dadurch gekennzeichnet, daß** als Identifikationsattribut (1, 2, 3, 4, 5, ID#xxx) ein Pfadname zur Beschreibung der Position des Datensatzes innerhalb eines hierarchischen Baums verwendet wird.

**12.** Verfahren nach mindestens einem der vorhergehenden Ansprüche, **dadurch gekennzeichnet, daß** ein Transferdatensatz aus dem Identifikationsattribut (1, 2, 3, 4, 5, ID#xxx) und den Relativkoordinaten (u,v) gebildet wird.

**13.** Verfahren nach Anspruch 12, **dadurch gekennzeichnet, daß** der Transferdatensatz dazu verwendet wird, eine Transformation der Relativkoordinaten (u, v) in Koordinaten des Ausgabebereichs (100) durchzuführen.

**14.** Verfahren nach mindestens einem der vorhergehenden Ansprüche, **dadurch gekennzeichnet, daß** im Falle, daß das Markierungsmittel (M) gleichzeitig im ersten Zustand in mehr als einem Darstellungsbereich (10a, 20a, 30a, 40a, 50a, 60a, 61a, 70a, 71a) angeordnet ist, der Darstellungsbereich (10a, 20a, 30a, 40a, 50a, 60a, 61a, 70a, 71a) angewählt wird, dessen Identifikationsattribut (1, 2, 3, 4, 5, ID#xxx) in einer Metrik der Identifikationsattribute (1, 2, 3, 4, 5, ID#xxx) einen Extremwert aufweist.

**15.** Verfahren nach mindestens einem der vorhergehenden Ansprüche, **dadurch gekennzeichnet, daß** der Darstellungsbereich (10a, 20a, 30a, 40a, 50a, 60a, 61a, 70a, 71a) angewählt wird, in dem die Position des Markierungsmittels (M) liegt.

**16.** Verfahren nach Anspruch 15, **dadurch gekennzeichnet, daß** falls die Position des Markierungsmittels (M) in mehreren Darstellungsbereichen (10a, 20a, 30a, 40a, 50a, 60a, 61a, 70a, 71a) liegt, der Darstellungsbereich (10a, 20a, 30a, 40a, 50a, 60a, 61a, 70a, 71a) angewählt wird, der die kleinste Fläche aufweist.

**17.** Verfahren nach mindestens einem der vorhergehenden Ansprüche, **dadurch gekennzeichnet, daß** der Darstellungsbereich (10, 20, 30, 40, 50, 60, 61, 70, 71) mindestens ein Wort oder ein graphisches Symbol aufweist.

**18.** Verfahren nach Anspruch 17, **dadurch gekennzeichnet, daß** die Positionierung des Markierungsmittels (M) durch das Identifikationsattribut (1, 2, 3, 4, 5, ID#xxx) und die Relativkoordinaten (u,v) so gesteuert wird, daß das Markierungsmittel (M) im zweiten Zustand auf demselben Wort oder demselben graphischen Symbol steht wie im ersten Zustand.

**19.** Vorrichtung zur Durchführung eines Verfahrens nach Anspruch 1 zur Steuerung eines Markierungsmittels, insbesondere eines Cursors, auf einer Ausgabeeinheit für Datensätze, mit einem auf der Ausgabeeinheit definierbaren Ausgabebereich, in dem mindestens ein Datensatz in einem Darstellungsbereich dargestellt ist und das Markierungsmittel einen Darstellungsbereich anwählt und die Form, Position und / oder Größe des Darstellungsbereichs im Ausgabebereich von einem ersten Zustand in einen zweiten Zustand veränderbar ist, wobei

a) dem mindestens einem Datensatz automatisch ein im ersten und zweiten Zustand eindeutiges Identifikationsattribut (1, 2, 3, 4, 5, ID#xxx) zugeordbar ist,

b) im ersten Zustand die Position (x,y) des Markierungsmittels (M) im Ausgabebereich (100) in Relativkoordinaten (u,v) des Darstellungsbereichs (10a, 20a, 30a, 40a, 50a, 60a, 61a, 70a, 71a) umgerechenbar ist,

c) der Darstellungsbereich (10b, 20b, 30b, 40b, 50b, 60b, 61b, 70b, 71b) im zweiten Zustand anhand des Identifikationsattributs (1, 2, 3, 4, 5, ID#xxx) identifizierbar ist und

d) das Markierungsmittel (M) automatisch im Darstellungsbereich (10b, 20b, 30b, 40b, 50b, 60b, 61b, 70b, 71b) entsprechend den Relativkoordinaten (u,v) und der Identifikationsattribute (1, 2, 3, 4, 5, ID#xxx) positionierbar ist.

20. Vorrichtung nach Anspruch 19, **dadurch gekennzeichnet, daß** diese in einem Handgerät angeordnet ist.

**Claims**

1. Method for controlling a marker, such as a cursor, on an output unit for data records, with
an output region which can be defined on the output unit, in which at least one data record is shown in a display region and the marker selects a display region, and
the form, position and/or size of the display region in the output region is changed from a first state into a second state,
**characterised in that**

a) the at least one data record is assigned automatically an identification attribute (1, 2, 3, 4, 5 ID#xxx) which is unique in the first and second state,

b) in the first state the position (x, y) of the marker (M) in the output region (100) is converted into relative coordinates (u, v) of the display region (10a, 20a, 30a, 40a, 50a, 60a, 61a, 70a, 71a),

c) the display region (10b, 20b, 30b, 40b, 50b, 60b, 61b, 70b, 71b) is identified in the second state from the identification attribute (1, 2, 3, 4, 5, ID#xxx) and

d) the marker (M) is positioned automatically in the display region (10b, 20b, 30b, 40b, 50b, 60b, 61b, 70b, 71b) corresponding to the relative coordinates (u, v) and the identification attribute (1, 2, 3, 4, 5, ID#xxx).

2. Method according to claim 1, **characterised in that** the relative arrangement of graphic elements, letters and/or words in at least one display region (10, 20, 30, 40, 50, 60, 61, 70, 71) is controlled through a layout function.

3. Method according to claim 2, **characterised in that** by means of the one reverse function of the layout function it is possible to determine relative coordinates (u, v) inside a display region (10, 20, 30, 40, 50, 60, 61, 70, 71).

4. Method according to claim 2 or 3, **characterised in that** the layout function assigns to each letter in a text a relative coordinate (u, v) which contains a relative position in the overall text and/or a level within a text line.

5. Method according to at least one of claims 2 to 4, **characterised in that** a layout function has at least one other subordinate layout function for a hierarchically controlled representation of the data records.

6. Method according to at least one of the preceding claims, **characterised in that** the relative coordinates (u, v) are converted in standard coordinates in the interval (0, 1).

7. Method according to at least one of the preceding claims, **characterised in that** the illustrated region (10, 20, 30, 40, 50) has a restriction line, more particularly a right angle.

8. Method according to claim 7, **characterised in that** the restriction line cannot be seen in the output area.

9. Method according to at least one of the preceding claims, **characterised in that** the at least one data record is part of a logical structure, more particularly according to the DOM or HTML standard and the identification attribute (1, 2, 3, 4, 5, ID#xxx) is determined in dependence on the logical structure.

10. Method according to at least one of the preceding claims, **characterised in that** as identification attribute (1, 2, 3, 4, 5, ID#xxx) are used numbers whereby the assignation of the identification attribute (1, 2, 3, 4, 5, ID#xxx) to the display region (10a, 20a, 30a, 40a, 50a, 60a, 61a, 70a, 71a) is formed in dependence on coordinates of a predeterminable point on the restriction line at a certain time point.

**11.** Method according to at least one of the preceding claims, **characterised in that** as identification attribute (1, 2, 3, 4, 5, ID#xxx) is used a path name for describing the position of the data record inside a hierarchical tree.

**12.** Method according to at least one of the preceding claims, **characterised in that** a transfer data record is formed from the identification attribute (1, 2, 3, 4, 5, ID#xxx) and the relative coordinates (u, v).

**13.** Method according to claim 12, **characterised in that** the transfer data record is used to carry out a transformation of the relative coordinates (u, v) into coordinates of the output region (100).

**14.** Method according to at least one of the preceding claims, **characterised in that** in the case where the marker (M) at the same time in the first state is disposed in more than one display region (10a, 20a, 30a, 40a, 50a, 60a, 61a, 70a, 71a) the display region (10a, 20a, 30a, 40a, 50a, 60a, 61a, 70a, 71a) is selected whose identification attribute (1, 2, 3, 4, 5, ID#xxx) has an extreme value in a metric of the identification attribute (1, 2, 3, 4, 5, ID#xxx).

**15.** Method according to at least one of the preceding claims, **characterised in that** the display region (10a, 20a, 30a, 40a, 50a, 60a, 61a, 70a, 71a) is selected in which the position of the marker (M) lies.

**16.** Method according to claim 15, **characterised in that** if the position of the marker (M) lies in several display regions (10a, 20a, 30a, 40a, 50, 60a, 61a, 70a, 71a) the display region (10a, 20a, 30a, 40a, 50, 60a, 61a, 70a, 71a) is selected which has the smallest area.

**17.** Method according to at least one of the preceding claims, **characterised in that** the display region (10, 20, 30a, 40, 50, 60, 61, 70, 71) has at least one word or a graphic symbol.

**18.** Method according to claim 17, **characterised in that** the positioning of the marker (M) is controlled through the identification attribute (1, 2, 3, 4, 5, ID#xxx) and the relative coordinates (u, v) so that the marker (M) in the second state stands on the same word or the same graphic symbol as in the first state.

**19.** Device for carrying out a method according to claim 1 for controlling a marker, more particularly a cursor on an output unit for data records with an output region which can be defined on the output unit, in which at least one data record is shown in a display region and the marker selects a display region and the form, position and/or size of the display region in the output region can be changed from a first state into a second state whereby

a) the at least one data record is automatically assigned an identification attribute (1, 2, 3, 4, , 5 ID#xxx) which is unique in the first and second state,

b) in the first state the position (x, y) of the marker (M) in the output region (100) can be converted into relative coordinates (u, v) of the display region (10a, 20a, 30a, 40a, 50a, 60a, 61a, 70a, 71a),

c) the display region (10b, 20b, 30b, 40b, 50b, 60b, 61b, 70b, 71b) can be identified in the second state from the identification attribute (1, 2, 3, 4, 5, ID#xxx) and

d) the marker (M) can be positioned automatically in the display region (10b, 20b, 30b, 40b, 50b, 60-b, 61b, 70b, 71b) according to the relative coordinates (u, v) and the identification attributes (1, 2, 3, 4, 5 ID#xxx).

**20.** Device according to claim 19, **characterised in that** this is arranged in a hand appliance.

## Revendications

**1.** Procédé de commande d'un moyen formant pointeur, en particulier d'un curseur, sur une unité de sortie d'enregistrements, comprenant

une zone de sortie, définissable sur l'unité de sortie, dans laquelle au moins un enregistrement est représenté dans une zone de représentation et le moyen formant pointeur sélectionne une zone de représentation, et

la forme, position et/ou dimension de la zone de représentation dans la zone de sortie sont modifiées d'un premier état à un deuxième état, **caractérisé en ce que**

a) un attribut d'identification, unique (1, 2, 3, 4, 5, ID#xxx) au premier et deuxième état, est associé automatiquement audit au moins un enregistrement,
b) dans le premier état, la position (x, y) du moyen formant pointeur (M) dans la zone de sortie (100) est convertie en coordonnées relatives (u, v) de la zone de représentation (10a, 20a, 30a, 40a, 50a, 60a, 61a, 70a, 71a),
c) la zone de représentation (10b, 20b, 30b, 40b, 50b, 60b, 61b, 70b, 71b) est identifiée dans le deuxième état à l'aide de l'attribut d'identification (1, 2, 3, 4, 5, ID#xxx), et

d) le moyen formant pointeur (M) est positionné automatiquement dans la zone de représentation (10b, 20b, 30b, 40b, 50b, 60b, 61b, 70b, 71b) selon les coordonnées relatives (u, v) et l'attribut d'identification (1, 2, 3, 4, 5, ID#xxx).

2. Procédé selon la revendication 1, **caractérisé en ce que** la disposition relative d'éléments graphiques, lettres et/ou mots dans au moins une zone de représentation (10, 20, 30, 40, 50, 60, 61, 70, 71) est commandée par l'intermédiaire d'une fonction de mise en page.

3. Procédé selon la revendication 2, **caractérisé en ce qu'**au moyen de ladite une fonction d'inversion de la fonction de mise en page, des coordonnées relatives (u, v) peuvent être déterminées à l'intérieur d'une zone de représentation (10, 20, 30, 40, 50, 60, 61, 70, 71).

4. Procédé selon la revendication 2 ou 3, **caractérisé en ce que** la fonction de mise en page associe à chaque lettre dans ün texte une coordonnée, relative (u, v) qui contient une position relative dans le texte global et/ou une hauteur à l'intérieur d'une ligne de texte.

5. Procédé selon au moins l'une des revendications 2 à 4, **caractérisé en ce qu'**une fonction de mise en page présente au moins une autre fonction de mise en page subordonnée pour une représentation des enregistrements commandée de façon hiérarchique.

6. Procédé selon au moins l'une quelconque des revendications précédentes, **caractérisé en ce que** les coordonnées relatives (u, v) sont converties en coordonnées normées dans l'intervalle [0, 1].

7. Procédé selon au moins l'une quelconque des revendications précédentes, **caractérisé en ce que** la zone de représentation (10, 20, 30, 40, 50) présente une ligne de délimitation, en particulier un rectangle.

8. Procédé selon la revendication 7, **caractérisé en ce que** la ligne de délimitation n'est pas visible dans la zone de sortie.

9. Procédé selon au moins l'une quelconque des revendications précédentes, **caractérisé en ce que** ledit au moins un enregistrement fait partie d'une structure logique, en particulier selon la norme DOM ou HTML et que l'attribut d'identification (1, 2, 3, 4, 5, ID#xxx) est déterminé en fonction de la structure logique.

10. Procédé selon au moins l'une quelconque des revendications précédentes, **caractérisé en ce que** des numéros sont utilisés comme attributs d'identification (1, 2, 3, 4, 5, ID#xxx), l'association des attributs d'identification (1, 2, 3, 4, 5, ID#xxx) à la zone de représentation (10a, 20a, 30a, 40a, 50a, 60a, 61a, 70a, 71a) étant réalisée en fonction des coordonnées d'un point prédéfinissable sur la ligne de délimitation à un instant donné.

11. Procédé selon au moins l'une quelconque des revendications précédentes, **caractérisé en ce qu'**un nom de chemin est utilisé comme attribut d'identification (1, 2, 3, 4, 5, ID#xxx) pour décrire la position de l'enregistrement à l'intérieur d'une arborescence hiérarchique.

12. Procédé selon au moins l'une quelconque des revendications précédentes, **caractérisé en ce qu'**un enregistrement de transfert est formé à partir de l'attribut d'identification (1, 2, 3, 4, 5, ID#xxx) et des coordonnées relatives (u, v).

13. Procédé selon la revendication 12, **caractérisé en ce que** l'enregistrement de transfert est utilisé pour effectuer une transformation des coordonnées relatives (u, v) en coordonnées de la zone de sortie (100).

14. Procédé selon au moins l'une quelconque des revendications précédentes, **caractérisé en ce qu'**au cas où le moyen formant pointeur (M) serait disposé en même temps dans le premier état dans plus d'une zone de représentation (10a, 20a, 30a, 40a, 50a, 60a, 61a, 70a, 71a), on sélectionne la zone de représentation (10a, 20a, 30a, 40a, 50a, 60a, 61a, 70a, 71a) dont l'attribut d'identification (1, 2, 3, 4, 5, ID#xxx) présente une valeur extrême dans une métrique des attributs d'identification (1, 2, 3, 4, 5, ID#xxx).

15. Procédé selon au moins l'une quelconque des revendications précédentes, **caractérisé en ce que** l'on sélectionne la zone de représentation (10a, 20a, 30a, 40, 50a, 60a, 61a, 70a, 71a) dans laquelle se trouve la position du moyen formant pointeur (M).

16. Procédé selon la revendication 15, **caractérisé en ce que** si la position des moyens formant pointeur (M) se trouve dans plusieurs zones de représentation (10a, 20a, 30a, 40a, 50a, 60a, 61a, 70a, 71a), on sélectionne la zone de représentation (10a, 20a, 30a, 40a, 50a, 60a, 61a, 70a, 71a) qui présente la plus petite superficie.

17. Procédé selon au moins l'une quelconque des revendications précédentes, **caractérisé en ce que** la zone de représentation (10, 20, 30, 40, 50, 60, 61, 70, 71) présente au moins un mot ou un symbole graphique.

18. Procédé selon la revendication 17, **caractérisé en ce que** le positionnement du moyen formant pointeur (M) est commandé par l'attribut d'identification (1, 2, 3, 4, 5, ID#xxx) et les coordonnées relatives (u, v) de telle sorte que le moyen formant pointeur (M) se trouve dans le deuxième état sur le même mot ou le même symbole graphique que dans le premier état.

19. Dispositif de mise en oeuvre d'un procédé selon la revendication 1 permettant de commander un moyen formant pointeur, en particulier un curseur, sur une unité de sortie d'enregistrements, avec une zone de sortie, définissable sur l'unité de sortie, dans lequel au moins un enregistrement est représenté dans une zone de représentation et le moyen formant pointeur sélectionne une zone de représentation, et la forme, position et/ou dimension de la zone de représentation est modifiable dans la zone de sortie d'un premier état à un deuxième état, dans lequel

a) un attribut d'identification (1, 2, 3, 4, 5, ID#xxx), unique au premier et deuxième état, peut être associé automatiquement audit au moins un enregistrement,
b) dans le premier état, la position (x, y) du moyen formant pointeur (M) dans la zone de sortie (100) peut être convertie en coordonnées relatives (u, v) de la zone de représentation (10a, 20a, 30a, 40a, 50a, 60a, 61a, 70a, 71a),
c) la zone de représentation (10b, 20b, 30b, 40b, 50b, 60b, 61b, 70b, 71b) peut être identifiée dans le deuxième état à l'aide de l'attribut d'identification (1, 2, 3, 4, 5, ID#xxx), et
d) le moyen formant pointeur (M) peut être positionné automatiquement dans la zone de représentation (10b, 20b, 30b, 40b, 50b, 60b, 61b, 70b, 71b) selon les coordonnées relatives (u, v) et l'attribut d'identification (1, 2, 3, 4, 5, ID#xxx).

20. Dispositif selon la revendication 19, **caractérisé en ce qu'**il est disposé dans un appareil portatif.

Fig. 1

Fig. 2a

Fig. 2b

100

100

A

x

y

10a

B

20a

M

A

x′

B

y′

10b

20b

M

EP 1 222 520 B1

# HTML Element Test Page

Welcher Geschlecht haben Sie ? | männlich |

Wählen Sie aus der Liste eine Frau aus, die Sie näher kennenlernen möchten:

○ Claudia —— 61
○ Tina
○ Sabrina —— 60
○ Petra

Wählen Sie aus der Liste einen Mann aus, den Sie nicht näher kennenlernen möchten:

71
○ Pavel Mayer  ○ Patrick Paulisch  ○ Alexander Artope
○ Henrik Traunervend  ○ Steffen Meschkat  ○ Stefan Dahlke
70

**Fig. 3a**

# HTML Element Test Page

Welches Geschlecht haben Sie ?

männlich

Wählen Sie aus der Liste eine Frau aus, die Sie näher kennenlernen möchten:

○ Claudia          —— 61
○ Tina
○ Sabrina          —— 60
○ Petra

Wählen Sie aus der Liste einen Mann aus, den Sie nicht näher kennenlernen möchten:

71 —— ○ Pavel Mayer
○ Patrick Paulisch
○ Alexander Artope
70 —— ○ Henrik Tramberend
○ Steffen Meschkat
○ Stefan Dahlke

## Fig. 3b

# Fig. 4

```
ID#0        <html>
ID#01         <head>
ID#010          <title>
ID#010          HTML Element Test Page
ID#010          </title>
ID#01         </head>
ID#1          <body>
ID#10           <h2>HTML Element Test Page</h2>
ID#11           Welches Geschlecht haben Sie ?
ID#12           <select id="name" size="1">
ID#120            <option value="1">männlich
ID#121            <option value="2">weiblich
ID#123            <option value="3">anderes
ID#12           </select>
ID#13           <br>
ID#13           <br>
ID#13           Wählen Sie aus der Liste eine Frau aus, die Sie näher kennenlernen möchten:
ID#13           <br><br>
ID#14           <h3>
ID#140            <input type="radio" name="kb">Claudia <br>
ID#141            <input type="radio" name="ka">Tina<br>
ID#142            <input type="radio" name="kb">Sabrina<br>
ID#143            <input type="radio" name="ka">Petra<br>
ID#144            <br><br>
ID#14           </h3>
ID#15             Wählen Sie aus der Liste einen Mann aus, den Sie nicht näher
ID#15           kennenlernen möchten:
ID#15             <br><br>
ID#16           <h3>
ID#160            <input type="radio" name="ka">Pavel Mayer
ID#161            <input type="radio" name="kb">Patrick Paulisch
ID#162            <input type="radio" name="kb">Alexander Artope
ID#163            <input type="radio" name="ka">Henrik Tramberend
ID#164            <input type="radio" name="kb">Steffen Meschkat
ID#165            <input type="radio" name="ka">Stefan Dahlke
ID#165            <br><br>
ID#16           </h3>
ID#17           <INPUT TYPE=button ID=btnEmergency VALUE="Zurückzugehen"
ID#17             onClick="alert('Zurück wurde gedrückt')">
ID#18           <INPUT TYPE=button ID=btnEmergency VALUE="Weiterzugehen"
ID#18             onClick="alert('Weiter wurde gedrückt')">
ID#1          </body>
ID#0        </html>
```